# EUROPÄISCHE PATENTANMELDUNG

(11) **EP 3 339 259 A1**
(43) Veröffentlichungstag der Anmeldung: **27.06.2018**
(21) Anmeldenummer: 17206199.6
(22) Anmeldetag: 08.12.2017
(51) Int. Cl.: C03B 23/04, C03C 23/00, B65C 3/02

(54) **VERFAHREN ZUM HERSTELLEN EINES GLASROHR-HALBZEUGS ODER EINES DARAUS HERGESTELLTEN HOHLGLASPRODUKTS MIT MARKIERUNGEN, SOWIE VERWENDUNGEN HIERVON**

(30) Priorität: 21.12.2016 DE 102016125129
(71) Anmelder: SCHOTT AG, 55122 Mainz (DE)
(72) Erfinder: Witzmann, André, 95679 Waldershof (DE); Trinks, Ulla, 95666 Mitterteich (DE); Männl, Reinhard, 95666 Mitterteich (DE)
(74) Vertreter: 2K Patentanwälte Blasberg Kewitz & Reichel

(57) **Zusammenfassung**

Ein Glasrohr-Halbzeug oder ein Hohlglasprodukt, das aus einem Glasrohr-Halbzeug hergestellt ist, ist mit einer ersten Markierung mit Information bezüglich Herkunft oder bezüglich Herkunft und Herstellung des Glasrohr-Halbzeugs und einer zweiten Markierung versehen, deren Information derart mit der Information der ersten Markierung verknüpft ist, um eine Entscheidung zu einer Originalität, insbesondere einer Authentizität, oder Herkunft des Glasrohr-Halbzeugs und/oder einer Herkunft Einrichtung zu ermöglichen, mit der die erste und/oder zweite Markierung auf dem Glasrohr-Halbzeug erzeugt wurde.

Die erste Markierung ist bevorzugt eine Markierung, die fälschungssicher bei Temperaturen oberhalb der Transformationstemperatur des Glases hergestellt ist. Die Kombination von zwei Markierungen ermöglicht eine hohe Fälschungssicherheit.

## Beschreibung

Die vorliegende Erfindung beansprucht die Priorität der Deutschen Patentanmeldung Nr. 10 2016 125 129.1, "Verfahren zum Herstellen eines Glasrohr-Halbzeugs oder eines daraus hergestellten Hohlglasprodukts mit Markierungen, sowie Verwendungen hiervon", angemeldet am 21. Dezember 2016, deren gesamter Inhalt hiermit im Wege der Bezugnahme ausdrücklich mit aufgenommen sei.

### GEBIET DER ERFINDUNG

Die vorliegende Erfindung betrifft allgemein die Verbesserung der Fälschungssicherheit von Glasrohr-Halbzeugen, wie diese insbesondere als Ausgangsmaterial zur Herstellung von Hohlglasprodukten aus Glas verwendet werden, insbesondere von Behältern für Substanzen für pharmazeutische, medizinische oder kosmetische Anwendungen, wie beispielsweise Vials, Karpulen oder Spritzenkörper, sowie daraus hergestellte Hohlglasprodukte aus Glas. Insbesondere betrifft die vorliegende Erfindung ein verbessertes Verfahren zum Herstellen eines Glasrohr-Halbzeugs oder eines daraus hergestellten Hohlglasprodukts mit zumindest einer Markierung, womit sich eine verbesserte Fälschungssicherheit aber auch eine zuverlässige Rückverfolgung, beispielsweise zum Zwecke einer Qualitätskontrolle und Qualitätsverbesserung, in einfacher Weise realisieren lässt.

### STAND DER TECHNIK

Aus dem Stand der Technik sind diverse Verfahren zur Markierung und Codierung von Halb- oder Fertigprodukten bekannt. Zur Markierung oder Codierung von Glas werden jedoch aufgrund der speziellen Materialeigenschaften und Herstellungsbedingungen üblicherweise Verfahren eingesetzt, bei denen Markierungen oder dergleichen unmittelbar in das Glasmaterial eingeschrieben werden.

Ein derartiges Verfahren ist beispielsweise in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Dabei wird das Glas abschnittsweise mit einem Laserpuls zur Aufbringung einer Markierung auf der Oberfläche beaufschlagt. Die Markierung ist deutlich sichtbar und kann insbesondere über eine von der Markierung ausgeübte Linsenwirkung zuverlässig ausgelesen werden, kann spannungsfrei bereits während der Herstellung bei hohen Temperaturen aufgebracht werden und eignet sich deshalb zum Aufbringen der Markierung bereits während der Herstellung von Glasrohr-Halbzeugen, also während der eigentlichen Rohrformgebung. Ein besonderer Vorteil dieses Verfahrens besteht darin, dass die Markierung bei Temperaturen oberhalb der Transformationstemperatur des Glases aufgebracht werden kann, ohne dass die Temperatur des Glasrohrstrangs nach der eigentlichen Rohrformgebung erneut auf derart hohe Temperaturen erhöht werden müsste. Mit dem Verfahren können Markierungen zur Bekämpfung der Produktpiraterie, aber auch Marken, Firmenlogos oder sonstige Produktausstattungen auf den Glasrohrstrang aufgebracht werden.

Weitere Verfahren zur Markierung von Glas-Substraten sind in WO 2004 000749 A1 und WO 2009 128893 A1 offenbart.

WO 2008 104688 A1 offenbart ein hohles Glasprodukt mit einer daran ausgebildeten Markierung, die Angaben zur Fertigungslinie und zum Herstellungsort enthält, was durch eine spezielle Zahlencodierung bewerkstelligt wird.

US 2009 0159174 A1 offenbart ein Verfahren zur Herstellung eines Pharmabehälters, bei dem auf den Pharmabehälter eine intrinsische und extrinsische Codierung aufgebracht wird, wobei diese beiden Codierungen so miteinander korreliert sind, dass der Behälter oder die von dem Behälter aufzunehmende pharmazeutische Substanz in eineindeutiger Weise durch eine Verknüpfung der intrinsischen und extrinsischen Codierung identifiziert werden kann. Die Markierungen auf den Behältnissen erlauben keine gesicherten Rückschlüsse auf das Glasrohr oder dessen Hersteller, Eigenschaften, da diese keine vollständige Rückverfolgbarkeit zum Ursprungsglas oder zum Hersteller des Ursprungsglases garantieren.

Bei der Herstellung von Glasrohren kommt es nach wie vor zu Fälschungen, was eine erhöhte Produktsicherheit schwierig macht. Dabei ist zu berücksichtigen, dass insbesondere für Pharmabehälter zunehmend höhere Spezifikationen eingehalten werden müssen, was nicht nur geometrische Abmessungen, wie beispielsweise Innendurchmesser, Wandstärke, Außendurchmesser und Toleranzen hierzu, sondern auch chemisch-physikalische Parameter anbelangt, wie beispielsweise chemische Beständigkeit, Abgabe von Ionen etc. Für eine erhöhte Produktsicherheit ist insbesondere auch eine verbesserte Informationslage bezüglich Herkunft, konkreten Produktionsbedingungen etc. bei der Herstellung von Glasrohr-Halbzeugen sowie bei der Herstellung von Hohlglasprodukten aus Glasrohr-Halbzeugen erforderlich.

### ZUSAMMENFASSUNG DER ERFINDUNG

Aufgabe der vorliegenden Erfindung ist es, in diesem Bereich für weitere Verbesserungen zu sorgen. Insbesondere sollen gemäß der vorliegenden Erfindung ein verbessertes Verfahren zum Herstellen eines Glasrohr-Halbzeugs oder eines daraus hergestellten Hohlglasprodukts mit Markierungen sowie Verwendungen hiervon bereitgestellt werden, womit sich eine verbesserte Fälschungssicherheit aber auch eine zuverlässige Rückverfolgung, beispielsweise zum Zwecke einer Qualitätskontrolle und Qualitätsverbesserung, in einfacher Weise realisieren lässt.

Diese Aufgabe wird durch ein Verfahren zum Herstellen eines Glasrohr-Halbzeugs nach Anspruch 1, durch ein Verfahren zum Herstellen eines daraus herstellten Hohlglasprodukts nach Anspruch 9 oder 10, durch ein Glasrohr-Halbzeug nach Anspruch 16 und durch ein Verfahren zur Rückverfolgung eines Glasrohr-Halbzeugs bzw. eines daraus herstellten Hohlglasprodukts gelöst. Weitere vorteilhafte Ausführungsformen sind Gegenstand der rückbezogenen Unteransprüche.

Gemäß einem ersten Gesichtspunkt der vorliegenden Erfindung wird ein Verfahren zum Herstellen eines Glasrohr-Halbzeugs bereitgestellt, mit den Schritten: Bereitstellen des Glasrohr-Halbzeugs mit einer ersten Markierung; und Markieren des Glasrohr-Halbzeugs mit einer zweiten Markierung; wobei die erste Markierung Information bezüglich Herkunft Glasrohr-Halbzeugs oder Information bezüglich Herkunft und Herstellung des Glasrohr-Halbzeugs umfasst; und wobei eine Information der zweiten Markierung derart mit einer Information der ersten Markierung verknüpft ist, um eine Entscheidung zu einer Originalität, insbesondere einer Authentizität, oder Herkunft des Glasrohr-Halbzeugs und/oder einer Herkunft Einrichtung zu ermöglichen, mit der die erste und/oder zweite Markierung auf dem Glasrohr-Halbzeug erzeugt wird.

Zum Feststellen der Originalität, insbesondere Authentizität, des Glasrohr-Halbzeugs kann insbesondere eine Rechenoperation anhand von Informationen aus der ersten und zweiten Markierung durchgeführt werden, insbesondere durch Vergleich, durch Überprüfung einer korrekten Verknüpfung von Informationen, durch eine aus den Informationen entsprechend einer vorbestimmten Rechenvorschrift berechneten Prüfsumme, oder es kann eine Verknüpfung der Datensätze selbst überprüft werden, beispielsweise eine Verknüpfung oder Verlinkung der entsprechenden Datensätze in einer Datenbank, die vom Hersteller des Original-Glasrohrs betrieben wird und auf die Dritten entsprechend Zugriff gewährt wird. Die Verknüpfung kann auch in der Art eines Echtheits-Zertifikats erfolgen, das auch in einer Markierung in das Glasrohr eingeschrieben sein kann.

Zur Feststellung der Herkunft des Glasrohr-Halbzeugs können Parameter oder Datensätze dienen, wie beispielsweise Zifferncodierungen, die einen Glasrohr-Hersteller, eine bei diesem erzeugte Seriennummer, Batch-Nummer, Zugnummer, Herstellungsdatum etc. codieren. Im Sinne der vorliegenden Erfindung können diese Parameter um weitere Informationen ergänzt sein, die einen vollständigen Stammbaum des Glasrohr-Halbzeugs abbilden. Diese Information kann in der ersten Markierung auch vollständig enthalten sein.

Bei der Einrichtung, mit der die erste Markierung auf dem Glasrohr-Halbzeug erzeugt wird, kann es sich insbesondere um eine Laservorrichtung handeln, um eine Markierung bei Temperaturen oberhalb der Transformationstemperatur des Glases aufzubringen, bevorzugt in Gestalt eines digitalen Matrix-Codes (DMC) mittels eines Verfahrens, wie in US 2003 0029849 A1, DE 102 34 002 A1 und WO 2012 028611 A1 der Anmelderin offenbart. Um nun Originalität, insbesondere Authentizität, dieser Einrichtung zu belegen, kann beim Aufbringen der ersten Markierung mit dieser Einrichtung eine weitere Information in das Glas eingeschrieben werden, die einen entsprechenden Rückschluss auf diese Einrichtung ermöglicht. Beispielsweise kann eine Seriennummer dieser Einrichtung mit in das Glasrohr eingeschrieben werden. Durch spätere Abgleichung mit einer vom Original-Hersteller oder einem weiterverarbeitenden Betrieb betriebenen Datenbank kann dann festgestellt werden, dass diese Einrichtung dazu berechtigt bzw. autorisiert war, um Markierungen auf dem Glasrohr-Halbzeug aufzubringen. Auch können intern in dieser Einrichtung ständig Prüfprozeduren ausgeführt werden und kann vorgesehen sein, dass die Markierung auf dem Glasrohr auch anzeigt, dass diese Prüfprozeduren erfolgreich durchlaufen wurden, um eine Unversehrtheit dieser Markierungseinrichtung zu belegen.

Bei der Einrichtung, mit der die erste Markierung auf dem Glasrohr-Halbzeug erzeugt wird, kann es sich grundsätzlich auch um Drucker oder Druckstempel handeln, womit die erste Markierung auf der Außenoberfläche des Glasrohr-Halbzeugs aufgebracht wird, was jedoch zweckmäßig einer sichere Lieferkette voraussetzt.

Gemäß einer weiteren Ausführungsform wird die erste Markierung bei der Rohrformgebung kontinuierlich oder diskontinuierlich unter vorbestimmten Abständen zueinander in Längsrichtung des Glasrohr-Halbzeugs erzeugt. Diese Abstände können insbesondere auf die später an dem Glasrohr-Halbzeug auszuführenden Prozessschritte zu dessen Weiterverarbeitung abgestimmt sein. Ist also beispielsweise bekannt, dass später Einzelsegmente einer vorbestimmten Länge von dem Glasrohr-Halbzeug abgetrennt werden sollen, um zu einem Hohlglasprodukt weiter verarbeitet zu werden, so können die ersten Markierungen jeweils unter diesem vorbestimmten Abstand zueinander aufgebracht werden um sicherzustellen, dass später auf jedem Hohlglasprodukt eine erste Markierung aufgebracht ist.

Gemäß einer weiteren Ausführungsform wird die zweite Markierung als einzelne Markierung an einer vorbestimmten Position auf dem Glasrohr-Halbzeug erzeugt, die verschieden zu einer Position der ersten Markierung ist. Diese zweite Markierung kann insbesondere bei einem weiterverarbeitenden Betrieb einfach abgetrennt und durch eine neue Markierung ersetzt werden, oder dort um eine zusätzliche Markierung ergänzt werden.

Gemäß einer weiteren Ausführungsform umfasst die erste Markierung weiterhin Information bezüglich Abmessungen des Glasrohr-Halbzeugs und/oder Prozessparametern bei der Rohrformgebung des Glasrohr-Halbzeugs.

Gemäß einer weiteren Ausführungsform wird die zweite Markierung bei Temperaturen oberhalb der Transformationstemperatur (T_{G}) des Glases des Glasrohr-Halbzeugs erzeugt. So kann in einfacher Weise eine hohe Fälschungssicherheit gewährleistet werden, da häufig eine erneute Erwärmung von Hohlglasprodukten auf Temperaturen oberhalb der Transformationstemperatur (T_{G}) des Glases technisch bedingt unmöglich ist, etwa wenn das Hohlglasprodukt bereits mit einer Substanz befüllt ist, oder wenn das Hohlglasprodukt mit derart hoher Genauigkeit hergestellt wurde, dass die Toleranzen bei einer erneuten Erwärmung auf Temperaturen oberhalb der Transformationstemperatur (T_{G}) des Glases nicht erneut eingehalten werden können.

Gemäß einer alternativen Ausführungsform wird die zweite Markierung bei Temperaturen unterhalb der Transformationstemperatur (T_{G}) des Glases des Glasrohr-Halbzeugs erzeugt, was erheblichen Verfahrensaufwand spart. Insbesondere kann die zweite Markierung beim Abtrennen des Glasrohr-Halbzeugs von einem kontinuierlichen Glasrohrstrang im Anschluss an die Rohrformgebung ausgebildet werden, insbesondere während oder im Rahmen einer Vereinzelung einer Mehrzahl von Glasrohr-Halbzeugen.

Gemäß einer weiteren Ausführungsform werden die erste und zweite Markierung als kombinierte Markierung unmittelbar nebeneinander auf dem Glasrohr-Halbzeug erzeugt. Die Markierungen können so vorteilhaft platzsparend aufgebracht und rasch ausgelesen werden, insbesondere mittels dergleichen Ausleseeinrichtung, ohne dass hierzu eine Verstellung dieser Ausleseeinrichtung erforderlich wäre.

Gemäß einer weiteren Ausführungsform wird die zweite Markierung während einer Vereinzelung des Glasrohr-Halbzeugs aus einem Endlos-Glasrohrstrang erzeugt. Da die Vereinzelung nur beim Original-Hersteller vorgenommen werden kann, ist so automatisch eine hohe Fälschungssicherheit gewährleistet.

Gemäß einem weiteren Gesichtspunkt der vorliegenden Erfindung wird ein Verfahren zum Herstellen eines Hohlglasprodukts aus einem Glasrohr-Halbzeug bereitgestellt, wobei das Glasrohr-Halbzeug mit einer ersten Markierung mit Information bezüglich der Herkunft des Glasrohr-Halbzeugs und einer zweiten Markierung markiert ist, deren Information derart mit der Information der ersten Markierung verknüpft ist, um eine Entscheidung zu einer Originalität, insbesondere einer Authentizität, oder zur Herkunft des Glasrohr-Halbzeugs und/oder zur Herkunft einer Einrichtung zu ermöglichen, mit der die erste und/oder zweite Markierung auf dem Glasrohr-Halbzeug erzeugt wurde, mit den Schritten: Bereitstellen des Glasrohr-Halbzeugs mit der ersten und der zweiten Markierung, wie vorstehend beschrieben; Weiterverarbeiten des Glasrohr-Halbzeugs und zumindest abschnittsweise thermisches Umformen des Glasrohr-Halbzeugs zu dem Hohlglasprodukt bei Temperaturen oberhalb einer Transformationstemperatur (T_{G}) des Glases des Glasrohr-Halbzeugs; wobei die erste und die zweite Markierung unverändert bleiben und auf dem hergestellten Hohlglasprodukt nach dessen Herstellung auslesbar sind, um eine relevante Entscheidung zur Originalität, insbesondere Authentizität, oder zur Herkunft des Glasrohr-Halbzeugs und/oder zur Herkunft einer Einrichtung zu ermöglichen, mit der die erste und/oder zweite Markierung auf dem Glasrohr-Halbzeug erzeugt wurde. Die zumindest abschnittsweise thermische Umformung kann beispielsweise ein thermisches Umformen nur eines Endabschnitts des Gasrohr-Halbzeugs umfassend; dabei braucht also nicht zwingend das gesamte Glasrohr-Halbzeug auf Temperaturen oberhalb einer Transformationstemperatur (T_{G}) des Glases erwärmt zu werden.

Gemäß einem weiteren Gesichtspunkt der vorliegenden Erfindung wird ein Verfahren zum Herstellen eines Hohlglasprodukts aus einem Glasrohr-Halbzeug bereitgestellt, wobei das Glasrohr-Halbzeug mit einer ersten Markierung mit Information bezüglich einer Herkunft des Glasrohr-Halbzeugs und einer zweiten Markierung markiert ist, deren Information derart mit der Information der ersten Markierung verknüpft ist, um eine Entscheidung zu einer Originalität, insbesondere einer Authentizität, oder zur Herkunft des Glasrohr-Halbzeugs und/oder zur Herkunft einer Einrichtung zu ermöglichen, mit der die erste und/oder zweite Markierung auf dem Glasrohr-Halbzeug erzeugt wurde, mit den Schritten: Bereitstellen des Glasrohr-Halbzeugs mit der ersten und der zweiten Markierung, wie vorstehend beschrieben; Weiterverarbeiten des Glasrohr-Halbzeugs und zumindest abschnittsweises thermisches Umformen des Glasrohr-Halbzeugs zu dem Hohlglasprodukt bei Temperaturen oberhalb einer Transformationstemperatur (T_{G}) des Glases des Glasrohr-Halbzeugs; wobei die zweite Markierung beim Weiterverarbeiten durch das zumindest abschnittsweises thermische Umformen des Glasrohr-Halbzeugs entfernt wird und eine zusätzliche Markierung auf dem Hohlglasprodukt erzeugt wird, sodass die erste und die zusätzliche Markierung auf dem hergestellten Hohlglasprodukt nach dessen Herstellung auslesbar sind, wobei eine Information der zusätzlichen Markierung derart mit einer Information der ersten Markierung verknüpft ist, um eine Entscheidung zu einer Originalität, insbesondere einer Authentizität, oder zur Herkunft des Hohlglasprodukts und/oder zur Herkunft einer Einrichtung zu ermöglichen, mit der die erste Markierung auf dem Glasrohr-Halbzeug erzeugt worden ist.

Ein weiterer Gesichtspunkt der vorliegenden Erfindung betrifft ein Hohlglasprodukt aus Glas, insbesondere ein Behälter zur Aufnahmen von Substanzen für pharmazeutische, medizinische oder kosmetische Anwendungen, hergestellt durch Weiterverarbeiten eines Glasrohr-Halbzeugs, wie vorstehend offenbart, einschließlich eines thermisches Umformen des Glasrohr-Halbzeugs, das zumindest abschnittsweise an dem Glasrohr-Halbzeug ausgeführt wird, beispielsweise an nur einem Endabschnitt des Glasrohr-Halbzeugs.

Ein weiterer Gesichtspunkt der vorliegenden Erfindung betrifft ein Verfahren zur Rückverfolgung eines Glasrohr-Halbzeugs, mit den Schritten: Auslesen einer ersten Information aus einer ersten Markierung, die auf dem Glasrohr-Halbzeug vorgesehen ist, wie vorstehend offenbart; Auslesen einer zweiten Information aus einer zweiten Markierung, die auf dem Glasrohr-Halbzeug vorgesehen ist, wie vorstehend offenbart; Feststellen, ob die erste und die zweite Information richtig miteinander verknüpft sind, um eine Entscheidung zu einer Originalität, insbesondere einer Authentizität, oder zur Herkunft des Glasrohr-Halbzeugs und/oder zur Herkunft einer Einrichtung zu ermöglichen, mit der die erste und/oder zweite Markierung auf dem Glasrohr-Halbzeug erzeugt worden ist, wie vorstehend offenbart.

Ein weiterer Gesichtspunkt der vorliegenden Erfindung betrifft ein entsprechendes Verfahren zur Rückverfolgung eines Hohlglasprodukts, das durch Weiterverarbeiten eines Glasrohr-Halbzeugs einschließlich einer zumindest abschnittsweise an diesem ausgeführten thermischen Umformung des Glasrohr-Halbzeugs hergestellt ist.

Ein weiterer Gesichtspunkt der vorliegenden Erfindung betrifft eine entsprechende Vorrichtung zur Rückverfolgung eines Glasrohr-Halbzeugs oder eines Hohlglasprodukts, das durch Weiterverarbeiten eines Glasrohr-Halbzeugs einschließlich einer zumindest abschnittsweise an diesem ausgeführten thermischen Umformung des Glasrohr-Halbzeugs hergestellt ist, wobei die Vorrichtung zum Durchführen des vorgenannten Verfahrens ausgelegt ist, wie nachfolgend offenbart.

Ein weiterer Gesichtspunkt der vorliegenden Erfindung betrifft ein entsprechendes Computerprogrammprodukt zur Durchführung des vorgenannten Verfahrens.

### FIGURENÜBERSICHT

Nachfolgend wird die Erfindung in beispielhafter Weise und unter Bezugnahme auf die beigefügten Zeichnungen beschrieben, woraus sich weitere Merkmale, Vorteile und zu lösende Aufgaben ergeben werden. Es zeigen:
- Fig. 1a: ein erstes Ausführungsbeispiel für ein Glasrohr-Halbzeug gemäß der vorliegenden Erfindung mit einer vergrößerten Darstellung von daran vorgesehenen Markierungen;
- Fig. 1b: ein zweites Ausführungsbeispiel für Glasrohr-Halbzeuge gemäß der vorliegenden Erfindung mit einer vergrößerten Darstellung einer daran vorgesehenen Markierung;
- Fig. 2a: ein erstes Ausführungsbeispiel für ein aus einem Glasrohr-Halbzeug hergestelltes Hohlglasprodukt gemäß der vorliegenden Erfindung mit einer vergrößerten Darstellung von daran vorgesehenen Markierungen;
- Fig. 2b: ein zweites Ausführungsbeispiel für ein aus einem Glasrohr-Halbzeug hergestelltes Hohlglasprodukt gemäß der vorliegenden Erfindung mit einer vergrößerten Darstellung ein daran vorgesehenen Markierung;
- Fig. 3: ein schematisches Flussdiagramm eines Verfahrens zur Herstellung eines Hohlglasprodukts gemäß der vorliegenden Erfindung, das durch Weiterverarbeiten eines Glasrohr-Halbzeugs einschließlich einer zumindest abschnittsweise ausgeführten thermischen Umformung des Glasrohr-Halbzeugs hergestellt ist;
- Fig. 4: ein schematisches Flussdiagramm eines Verfahrens zur Rückverfolgung eines Hohlglasprodukts gemäß der vorliegenden Erfindung, das durch Weiterverarbeiten eines Glasrohr-Halbzeugs einschließlich einer thermischen Umformung des Glasrohr-Halbzeugs hergestellt ist;
- Fig. 5: ein schematisches Diagramm einer Vorrichtung zur Feststellung der Authentizität oder Rückverfolgung eines Hohlglasprodukts gemäß der vorliegenden Erfindung, das durch Weiterverarbeiten eines Glasrohr-Halbzeugs einschließlich einer thermischen Umformung des Glasrohr-Halbzeugs hergestellt ist;
- Fig. 6a: schematisch in verschiedenen Stadien der Weiterverarbeitung eines Glasrohr-Halbzeugs die an diesem vorgesehenen Markierungen zusammenfasst; und
- Fig. 6b: ein schematisches Flussdiagramm der verschiedenen Stadien der Weiterverarbeitung eines Glasrohr-Halbzeugs zu einem Pharma-Packmittel und dessen weitere Verarbeitung.

In den Figuren bezeichnen identische Bezugszeichen identische oder im Wesentlichen gleichwirkende Elemente oder Gruppen von Elementen.

### AUSFÜHRLICHE BESCHREIBUNG VON AUSFÜHRUNGSBEISPIELEN

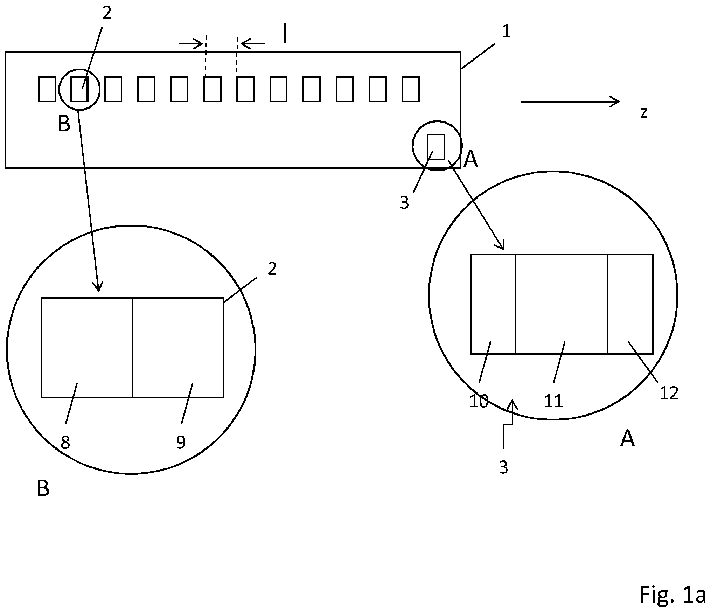

Fig. 1a zeigt ein erstes Ausführungsbeispiel für ein Glasrohr-Halbzeug gemäß der vorliegenden Erfindung mit einer vergrößerten Darstellung von daran vorgesehenen Markierungen. Zur Herstellung des Glasrohr-Halbzeugs 1 wird auf den Glasrohrstrang fortwährend eine Rohrstrangmarkierung 2 ("erste Markierung") aufgebracht, die zumindest eine erste Information 8 enthält. Diese erste Information 8 enthält erfindungsgemäß Information, die in Verknüpfung mit einer weiteren Information ("zweite Markierung", wie nachfolgend ausgeführt), die an einer anderen Position auf dem Glasrohr-Halbzeug vorgesehen ist, bevorzugt Angaben zu Hersteller, Produktionsort und/oder Produktionsanlage des Glasrohrs 1 anzeigt und bleibt erfindungsgemäß bis zum Hohlglasprodukt (beispielsweise Pharmabehälter) unverändert erhalten. Diese Angaben zu Hersteller, Produktionsort und/oder Produktionsanlage des Glasrohrs 1 können nicht codiert in die erste Information 8 geschrieben sein, können jedoch grundsätzlich auch codiert sein und sind dann nicht in Klarschrift auslesbar sondern erst entsprechend einer vorbestimmten Rechen- oder Decodierungsanweisung auslesbar.

Gemäß der Fig. 1a sind die Rohrstrangmarkierungen 2 in der Längsrichtung (z) des Glasrohr-Halbzeugs 1 bevorzugt unter vorbestimmten, konstanten Abständen (1) zueinander auf dem Glasrohr-Halbzeug 1 angebracht. Diese Abstände 1 können beispielsweise abgestimmt sein auf die zu erwartenden Längen derjenigen Abschnitte, aus denen später die Hohlglasprodukte (beispielsweise Pharmabehälter) hergestellt werden sollen und die hierzu von einem Original-Glasrohr-Halbzeug abgelängt werden müssen, einschließlich etwaigen Verschnitts und abzutrennender Abschnitte.

Zweckmäßig enthält die Rohrstrangmarkierung 2 zusätzlich zumindest eine zweite Information 9, die später eine Rückverfolgbarkeit eines von dem Glasrohr-Halbzeug 1 abgetrennten Glasrohr-Halbzeug-Abschnitts oder des später daraus hergestellten Hohlglasprodukts (beispielsweise Pharmabehälter) ermöglicht. Bei dieser zweiten Information 9 kann es sich insbesondere um Daten bezüglich Chargennummer, Rohrstrangnummer, eine Serien-Nummer eines aus dem Rohrstrang vereinzelten Glasrohr-Halbzeugs, Herstellungszeit handeln. Die zweite Information 9 kann zusätzliche Informationen enthalten, beispielsweise bezüglich geometrischer Abmessungen in den jeweiligen Abschnitten der Rohrstrangmarkierungen 2, wie beispielsweise Außendurchmesser, Innendurchmesser, Wandstärke, Ovalität, Krümmungsradius etc. Diese geometrischen Daten können mittels einer inline-Messung bereits unmittelbar im Anschluss an die Rohrformgebung ermittelt und auf dem Rohrstrang markiert werden, können jedoch auch grundsätzlich erst im Anschluss an eine Vereinzelung von Glasrohr-Halbzeugen aus dem Rohrstrang ermittelt und auf dem Rohrstrang markiert werden.

Denkbar ist auch, dass die vorgenannte zusätzliche Information der Rohrstrangmarkierungen 2, beispielsweise bezüglich geometrischer Abmessungen in den jeweiligen Abschnitten des Glasrohrstrangs, wie beispielsweise Außendurchmesser, Innendurchmesser, Wandstärke, Ovalität, Krümmungsradius etc., erst durch Kombinieren der zweiten Information 9, wie vorstehend ausgeführt, mit Information aus einer zweiten Markierung 3 auslesbar werden, wie nachfolgend ausgeführt, insbesondere entsprechend einer vorbestimmten Rechen- oder Decodierungsanweisung.

Abhängig vom Zeitpunkt des Aufbringens der Rohrstrangmarkierung 2 ist auch das zum Markieren eingesetzte Verfahren gewählt. So kann es ausreichend sein, wenn die Rohrstrangmarkierung bei Temperaturen unterhalb einer Transformationstemperatur des Glases aufgebracht wird, beispielsweise mittels Lasermarkierung. Bevorzugt wird jedoch die Rohrstrangmarkierung 2 bei Temperaturen oberhalb der Transformationstemperatur des Glases aufgebracht, bevorzugt in Gestalt eines digitalen oder binär codierten Codes, beispielsweise mittels eines Verfahrens, wie in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Die vorgenannten Daten können dabei in Klarschrift oder mittels einer vorbestimmten Codierung aufgebracht werden.

Gemäß der Fig. 1a ist an jedem Glasrohr-Halbzeug 1 zumindest eine zweite Markierung 3 an geeigneter Position vorgesehen, beispielsweise an einem jeweiligen Beginn oder Ende eines Glasrohr-Halbzeugs 1. Diese zweite Markierung 3 enthält zumindest eine erste Information 10. Diese erste Information 10 enthält bevorzugt Angaben zu Hersteller, Produktionsort und/oder Produktionsanlage des Glasrohrs 1. Diese Angaben können in Klarschrift aufgebracht werden, sind jedoch bevorzugt codiert eingeschrieben.

Gemäß der Fig. 1a enthält die zweite Markierung 3 bevorzugt weitere Information wie folgt: eine zweite Information 11 mit Information, die in Verknüpfung mit einer weiteren Information, bei der es sich entweder um die Rohrstrangmarkierung 2 (oder einen Abschnitt hiervon) oder um die vorgenannte erste Information 10 handeln kann, redundant Angaben zu Hersteller, Produktionsort und/oder Produktionsanlage des Glasrohrs 1 anzeigt. Diese Angaben zu Hersteller, Produktionsort und/oder Produktionsanlage des Glasrohrs 1 sind allerdings nicht in Klarschrift aus der zweiten Information 11 auslesbar sondern erst entsprechend einer vorbestimmten Rechen- oder Decodierungsanweisung und in Verknüpfung mit der vorgenannten weiteren Information, und können so zu einer erhöhten Fälschungssicherheit und Produktqualität beitragen.

Gemäß der Fig. 1a kann die zweite Markierung 3 zusätzlich zumindest noch eine dritte Information 12 enthalten, die Rückschlüsse ermöglicht, welche Einrichtung zum Erzeugen der ersten Markierung 2 (Rohrstrangmarkierung) und/oder der zweiten Markierung 3 auf dem Glasrohr-Halbzeug 1 verwendet wurde. Dabei kann es sich beispielsweise um eine Seriennummer, Typenbezeichnung etc. einer solchen Einrichtung handeln, die vom Original-Hersteller des Glasrohr-Halbzeugs 1 oder von einem von diesem dazu autorisierten Gerätehersteller zur Verfügung gestellt wird. Diese Information kann auch zusätzlich durch einen externen Dienstleister, beispielsweise eine Prüfagentur, zertifiziert sein. Diese Information kann in Klarschrift auslesbar sein, ist jedoch bevorzugt entsprechend einer vorbestimmten Rechen- oder Decodierungsvorschrift auslesbar.

Bevorzugt wird die zweite Markierung 3 bei Temperaturen unterhalb der Transformationstemperatur des Glases aufgebracht, sodass die erste Markierung unversehrt bleibt und auch die geometrischen Eigenschaften des Glasrohr-Halbzeugs 1 nicht weiter beeinflusst werden. Zu diesem Zweck kann die zweite Markierung insbesondere durch Aufdrucken oder Aufstempeln erzeugt werden, beispielsweise eines Balken- oder Strichcodes. Verwendbar sind hier beliebige andere Markierungsverfahren, mit denen eine Markierung bei Temperaturen unterhalb der Transformationstemperatur des Glases aufgebracht werden kann. Die vorgenannten Daten können dabei in Klarschrift oder mittels einer vorbestimmten Codierung aufgebracht werden.

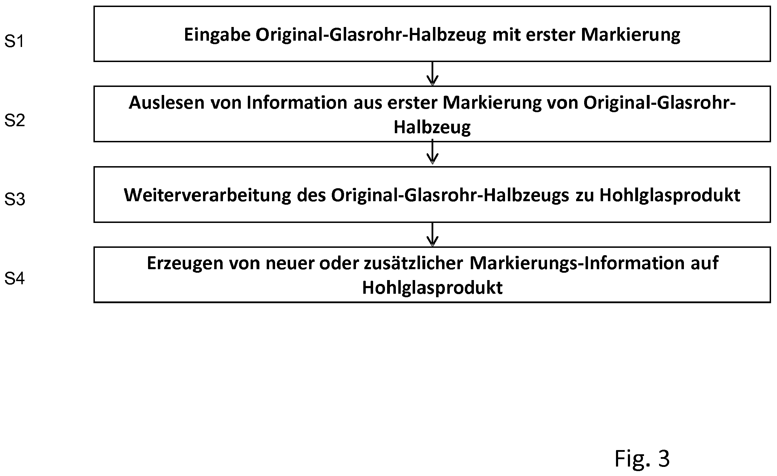

Während die Rohrstrangmarkierung 2 erfindungsgemäß bis zum Hohlglasprodukt (beispielsweise Pharmabehälter) unverändert erhalten bleibt, kann die zweite Markierung 3 bei der Weiterverarbeitung des Glasrohr-Halbzeugs 1 zu dem Hohlglasprodukt bei einem weiterverarbeitenden Betrieb entfernt und gemäß einer vorbestimmten Rechen- oder Codierungsvorschrift und unter Beibehaltung des Informationsgehalts der zweiten Markierung 3 bezüglich Rückverfolgbarkeit des Glasrohr-Halbzeugs durch eine andere zweite Markierung ("neue Markierung") ersetzt werden, wie nachfolgend anhand der Fig. 3 ausführlicher beschrieben.

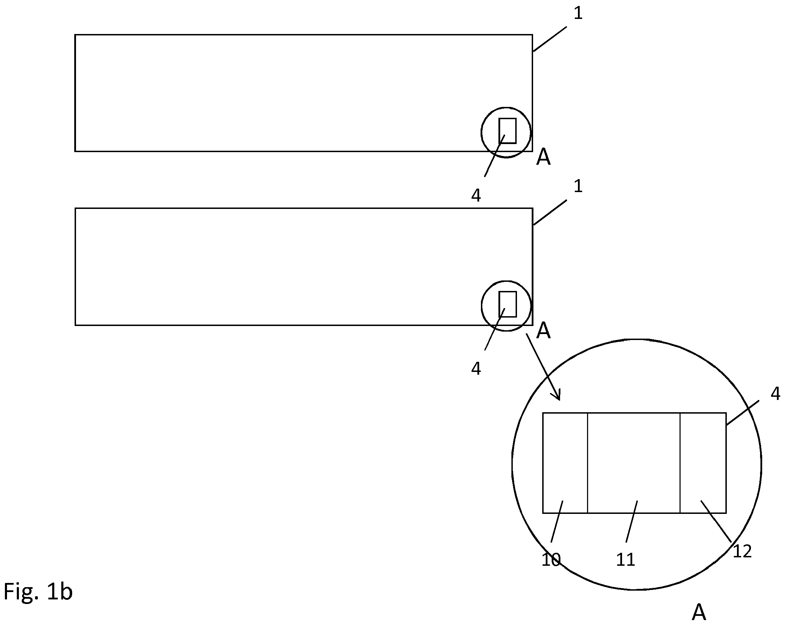

Die Fig. 1b zeigt ein zweites Ausführungsbeispiel für ein Glasrohr-Halbzeug gemäß der vorliegenden Erfindung mit einer vergrößerten Darstellung einer daran vorgesehenen Markierung. Konkret dargestellt sind zwei Glasrohr-Halbzeuge 1 nach dem Ablängen vom kontinuierlichen Glasrohrstrang und nach Ihrer Vereinzelung. Gemäß der Fig. 1b ist statt der räumlich getrennt aufgebrachten ersten und zweiten Markierung auf dem Glasrohr-Halbzeug 1 an einer vorbestimmten Stelle, beispielsweise an einem Beginn oder Ende des Glasrohr-Halbzeugs 1, eine Kombinations-Markierung 4 vorgesehen, die zumindest eine erste und eine zweite Information 10, 11 enthält, die derart in unmittelbarer Nähe zueinander angeordnet und miteinander verknüpft sind, um in entsprechender Weise, wie vorstehend anhand der Fig. 1a beschrieben, eine Entscheidung zu einer Originalität, insbesondere einer Authentizität, oder zur Herkunft des Glasrohr-Halbzeugs 1 und/oder zur Herkunft einer Einrichtung zu ermöglichen, mit der die erste und/oder zweite Markierung auf dem Glasrohr-Halbzeug 1 erzeugt wurde. Zweckmäßig ist in der Kombinations-Markierung 4 zumindest eine dritte Information 12 vorgesehen. Die Unterabschnitte 10-12 der Kombinations-Markierung 4 können gemeinsam in einem einzelnen Markierungsschritt oder zweckmäßig auch nacheinander in getrennten Markierungsschritten aufgebracht werden.

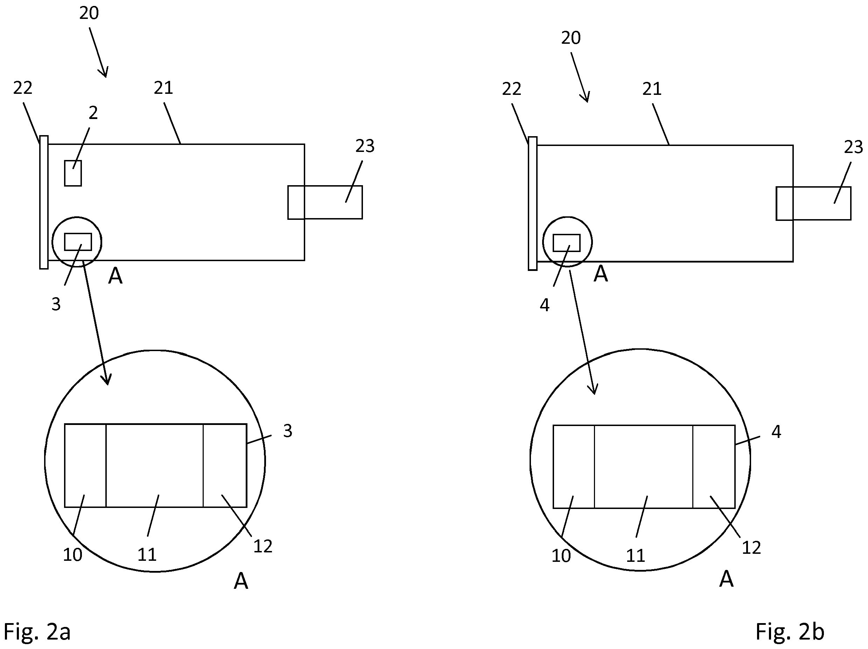

Die Fig. 2a zeigt ein erstes Ausführungsbeispiel für ein Hohlglasprodukt, das aus einem Glasrohr-Halbzeug, wie vorstehend beschrieben, hergestellt wurde. Bei dem Hohlglasprodukt handelt es sich um einen Pharmabehälter 20 in Gestalt eines hohlzylindrischen Spritzenkörpers 21 mit einem Flansch 22 und einer Ausstoßöffnung 23. Gemäß der Fig. 2a sind auf dem Spritzenkörper 21 eine erste Markierung 2 und eine zweite Markierung 3 aufgebracht, zweckmäßig an zueinander beabstandeten Positionen. Erfindungsgemäß ist die Information der ersten und zweiten Markierung derart miteinander verknüpft, um eine Entscheidung zu einer Originalität, insbesondere einer Authentizität, oder zur Herkunft des Hohlglasprodukts 20 und/oder zur Herkunft einer Einrichtung zu ermöglichen, mit der die erste und/oder zweite Markierung auf dem Glasrohr-Halbzeug 1 erzeugt worden ist, aus dem das Hohlglasprodukt 20 durch Weiterverarbeitung hergestellt wurde, insbesondere durch eine Weiterverarbeitung die ein zumindest abschnittsweises thermisches Umformen umfasst, insbesondere bei Temperaturen oberhalb der Transformationstemperatur des Glases, wie vorstehend beschrieben.

Fig. 2b zeigt ein weiteres Ausführungsbeispiel für ein solches aus einem Glasrohr-Halbzeug hergestelltes Hohlglasprodukt, wobei statt der ersten und zweiten Markierung, wie in der Fig. 2a gezeigt, eine Kombinations-Markierung 4 vorgesehen ist, wie vorstehend anhand der Fig. 1b beschrieben.

Die Fig. 3 zeigt ein schematisches Flussdiagramm eines Verfahrens zur Herstellung eines Hohlglasprodukts gemäß der vorliegenden Erfindung, das durch Weiterverarbeiten eines Glasrohr-Halbzeugs einschließlich einer zumindest abschnittsweisen thermischen Umformung des Glasrohr-Halbzeugs hergestellt wurde, insbesondere bei Temperaturen oberhalb der Transformationstemperatur des Glases. Beispielsweise kann das Glasrohr-Halbzeug an einem Ende ausreichend erwärmt und dann in diesem Bereich thermisch umgeformt werden. Dieses Verfahren wird bevorzugt bei einem weiterverarbeitenden Betrieb ausgeführt, der von einem Original-Hersteller Original-Glasrohr-Halbzeuge bezieht und diese zu gewünschten Hohlglasprodukten weiterverarbeitet. Ein bevorzugtes Beispiel für solche Hohlglasprodukte, die im Sinne der vorliegenden Erfindung, aus Original-Glasrohr-Halbzeugen hergestellt werden, sind Behälter für Substanzen für pharmazeutische, medizinische oder auch kosmetische Anwendungen.

Zunächst wird in dem Schritt S1 ein Glasrohr-Halbzeug, wie vorstehend anhand der Figuren 1a und 1b beschrieben, zu dessen Weiterverarbeitung in den Prozess eingespeist. Das Original-Glasrohr ist dabei zumindest mit einer ersten Markierung versehen, insbesondere einer Kombinations-Markierung, wie vorstehend anhand der Fig. 1b beschrieben. Bevorzugt sind an dem Original-Glasrohr zwei Markierungen vorgesehen, insbesondere eine kontinuierlich bzw. unter vorbestimmten Abständen zueinander aufgebrachte Rohrstrangmarkierung 2 und eine zweite Markierung 3 (vgl. Fig. 1a), die bevorzugt an nur einer vorbestimmten Position vorgesehen ist.

Anschließend wird die Information der Markierung(en) in den Schritt S2 ausgelesen und steht für die weitere Verarbeitung zur Verfügung. Voraussetzung ist hierzu, dass der weiterverarbeitende Betrieb hierzu Kenntnis von allen relevanten Informationen und Spezifikationen hat, in welcher Weise die Markierung(en) von dem Original-Glasrohr auszulesen und weiter zu verarbeiten ist, beispielsweise zum Zwecke einer Decodierung und erneuten Codierung zum Aufbringen einer neuen oder zusätzlichen Markierung in dem Schritt S4. Denkbar ist hierzu grundsätzlich, dass die relevanten Einrichtungen beim weiterverarbeitenden Betrieb, insbesondere eine Einrichtung zum Auslesen der Markierung(en) und eine Einrichtung zum Aufbringen einer neuen oder zusätzlichen Markierung in dem Schritt S4, über ein Netzwerk, wie beispielsweise das Internet, bevorzugt über eine gesicherte Verbindung mit Verschlüsselung, mit einem Zentralprozessor oder einer Datenbank das Herstellers der Original-Glasrohre in Verbindung stehen.

Während der Weiterverarbeitung des Original-Glasrohr-Halbzeugs beim weiterverarbeitenden Betrieb kann dabei nach vorherigem Auslesen der relevanten Informationen insbesondere die zweite Markierung 3 (vgl. Fig. 1a) oder zumindest ein Abschnitt der Kombinations-Markierung 4 (vgl. Fig. 1b) entfernt werden, beispielsweise durch Abtrennen eines Endabschnitts des Original-Glasrohr-Halbzeugs mit der zweiten Markierung 3, oder in geeigneter Weise unlesbar gemacht werden, beispielsweise durch Überschreiben der relevanten Information bzw. Markierung mit Leerinformation. Hierüber kann auch eine entsprechende Rückmeldung an den Hersteller des Original-Glasrohr-Halbzeugs erfolgen, etwa zur Aktualisierung einer von dem Hersteller betriebenen Datenbank mit relevanten Informationen zu sämtlichen von diesem hergestellten Glasrohr-Halbzeuge.

Die Weiterverarbeitung des Original-Glasrohr-Halbzeugs kann insbesondere eine abschnittsweise thermische Umformung bei Temperaturen oberhalb der Transformationstemperatur des Glases beinhalten. Dabei kann im noch wärmeweichen Zustand des Glases in dem Schritt S4 eine neue oder zusätzliche Information auf dem umgeformten Hohlglasprodukt aufgebracht werden, bevorzugt in Gestalt eines digitalen Matrix-Codes (DMC) mittels eines Verfahrens, wie in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Die vorgenannten Daten können dabei in Klarschrift oder mittels einer vorbestimmten Codierung aufgebracht werden.

Selbstverständlich kann im Sinne der vorliegenden Erfindung vorgesehen sein, dass der weiterverarbeitende Betrieb seinerseits relevante Prozessparameter bei der Weiterverarbeitung des Original-Glasrohr-Halbzeugs zu dem Hohlglasprodukt misst und aufzeichnet. Diese Information kann in die Erzeugung der neuen oder zusätzlichen Markierung auf dem Hohlglasprodukt mit einfließen, sei es, dass die relevanten Prozessparameter unmittelbar in die neue oder zusätzliche Markierung aufgenommen werden, sei es, dass ein entsprechender Link auf die entsprechenden Datensätze in einer von dem weiterverarbeitenden Betrieb betriebenen Datenbank in die neue oder zusätzliche Markierung integriert wird, auf die jedenfalls der Original-Hersteller der Original-Glasrohre und der weiterverarbeitende Betrieb, ggf. jedoch auch weitere Parteien, wie beispielsweise Zertifizierungs-Dienstleister, Zugriff haben.

Zur Erzeugung der neuen oder zusätzlichen Markierung auf dem Hohlglasprodukt werden dabei die relevanten Informationen, die aus der ersten und/oder zweite Markierung des Original-Glasrohrs ausgelesen werden, so miteinander verknüpft, dass eine Entscheidung zu einer Originalität, insbesondere einer Authentizität, oder zur Herkunft des Original-Glasrohrs, aus dem das Hohlglasprodukt hergestellt wird, und/oder zur Herkunft einer Einrichtung möglich ist, mit der die erste und/oder zweite Markierung auf diesem Original-Glasrohr erzeugt worden ist. Insbesondere soll so eine vollständige Rückverfolgbarkeit zu allen relevanten Informationen desjenigen Original-Glasrohrs bzw. des entsprechenden Abschnittes davon möglich sein, aus dem das jeweilige Hohlglasprodukt hergestellt worden ist. Mit andere Worten: erfindungsgemäß wird ein vollständiger Stammbaum der relevanten Daten vom Original-Glasrohr bzw. vom entsprechenden Abschnitt davon bis hin zum Hohlglasprodukt möglich, sodass nicht nur eine hohe Fälschungssicherheit resultiert, sondern zum Zwecke einer Qualitätskontrolle und Optimierung von Logistik- und Weiterverarbeitungsschritten auch eine vollständige Rückverfolgbarkeit zu sämtlichen relevanten Parametern des Original-Glasrohrs bzw. des entsprechenden Abschnitts davon möglich ist.

So kann bereits bei der Rohrformgebung der Endlos-Rohrstrang mit allen relevanten Ursprungsparametern (Hersteller, Seriennummer, Glasschmelze, Rohrzug ...) markiert werden. Diese Markierung wird kombiniert mit einer zusätzlichen Markierung bei der Rohrvereinzelung. Die Markierung auf dem vereinzelten Glasrohr ist erfindungsgemäß mit der Rohrstrangmarkierung derart kombiniert, dass eine Fälschung auf dem Einzelrohr sofort erkannt würde. Die Rohrstrangmarkierung bleibt bis zum Hohlglasprodukt erhalten. Erhält der weiterverarbeitende Betrieb ein Original-Glasrohr, das durchgehend markiert ist und insbesondere eine zusätzliche Markierung (z.B. DMC) enthält, so kann später eindeutig geprüft werden, ob die Einzelmarkierung auf dem Glasrohr vom Original-Hersteller des Glasrohrs stammt oder auf eine Fälschung in der Lieferkette hindeutet.

Durch die Codierung bzw. Markierung des Hohlglasprodukts beim weiterverarbeitenden Betrieb kann auch am Hohlglasprodukt, z.B. auf Seiten des Verbrauchers, die Authentizität der Hohlglasprodukte geprüft werden, also beispielsweise von Pharmabehältern, nämlich dadurch, dass die Codierung des weiterverarbeitenden Betriebs in geeigneter Weise mit der/den Markierung(en) des Original-Herstellers verknüpft ist, also beispielsweise einen Link auf einen Rohrcode des Original-Glasrohrs enthält. Da die kontinuierliche Markierung der Original-Glasrohre Temperaturen oberhalb der Transformationstemperatur (T_{G}) des Glases erfordert, ist eine Fälschung in späteren Prozessschritten extrem aufwändig oder gar unmöglich, beispielsweise nach einer Befüllung eines Pharmabehälters mit einer pharmazeutischen Substanz. Die erfindungsgemäß vorgeschlagene Codekombination ermöglicht damit eine hohe Fälschungssicherheit. Gleichzeitig ist auch eine vollständige Rückverfolgbarkeit der relevanten Herstellungs- und Prozessparameter bis zur Quelle, d.h. bis zum Original-Glasrohr, möglich, was erhebliche Vorteile bei der Qualitätssicherung ermöglicht. Damit stehen auch später wichtige Informationen für Reklamationen oder Schadensanalysen zur Verfügung.

Durch die vorgenannte logische Verknüpfung der relevanten Information beim weiterverarbeitenden Betrieb und Erzeugung einer neuen oder zusätzlichen Markierung kann der Stammbaum des Materials von der Herstellung des Original-Glasrohrs, aus dem das Hohlglasprodukt hergestellt worden ist, bis zum Hohlglasprodukt hin vollständig zurück verfolgt werden.

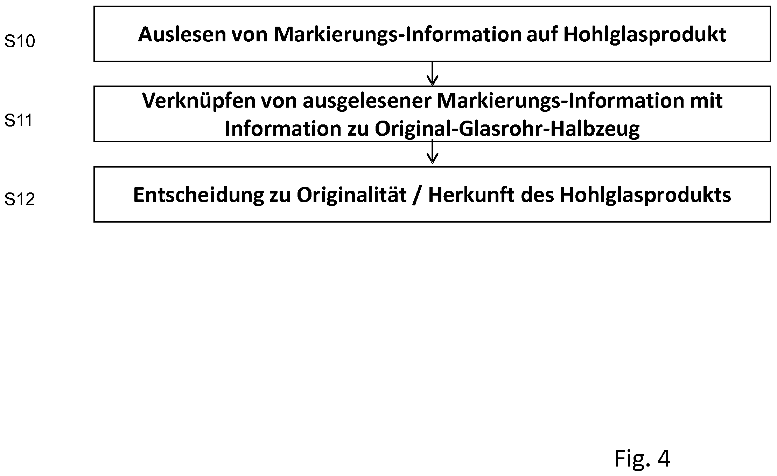

Fig. 4 zeigt ein schematisches Flussdiagramm eines Verfahrens zur Rückverfolgung eines Hohlglasprodukts gemäß der vorliegenden Erfindung, das durch Weiterverarbeiten eines Glasrohr-Halbzeugs einschließlich einer thermischen Umformung des Glasrohr-Halbzeugs hergestellt worden ist. Dieses Verfahren kann insbesondere bei einem Verbraucher oder auch zum Zwecke der Qualitätskontrolle und -sicherung durchgeführt werden. Zunächst wird hierzu in dem Schritt S10 Information aus der zumindest einen Markierung auf dem Hohlglasprodukt ausgelesen, also gemäß der Fig. 2a aus der ersten und zweiten Markierung 2, 3 oder gemäß der Fig. 2b aus der aufgebrachten Kombinations-Markierung 4. Diese ausgelesene Information wird in dem Schritt S11 mit weiterer Information zu dem Original-Glasrohr verknüpft, um auf Grundlage der Verknüpfung abschließend in dem Schritt S12 eine Entscheidung zu einer Originalität, insbesondere einer Authentizität, oder Herkunft des Glasrohr-Halbzeugs, aus dem das Hohlglasprodukt hergestellt worden ist, und/oder einer Einrichtung zu ermöglichen, mit der die erste und/oder zweite Markierung auf dem Glasrohr-Halbzeug erzeugt worden ist. Hierzu kann ein Zugriff auf eine Datenbank vorgesehen sein, die von dem Hersteller des Original-Glasrohrs und/oder von dem weiterverarbeitenden Betrieb betrieben wird. Dieser Zugriff kann über ein Netzwerk, beispielsweise ein Unternehmens-Netzwerk oder das Internet, erfolgen, wobei bevorzugt gesicherte Verbindungen einschließlich einer Verschlüsselung eingesetzt werden.

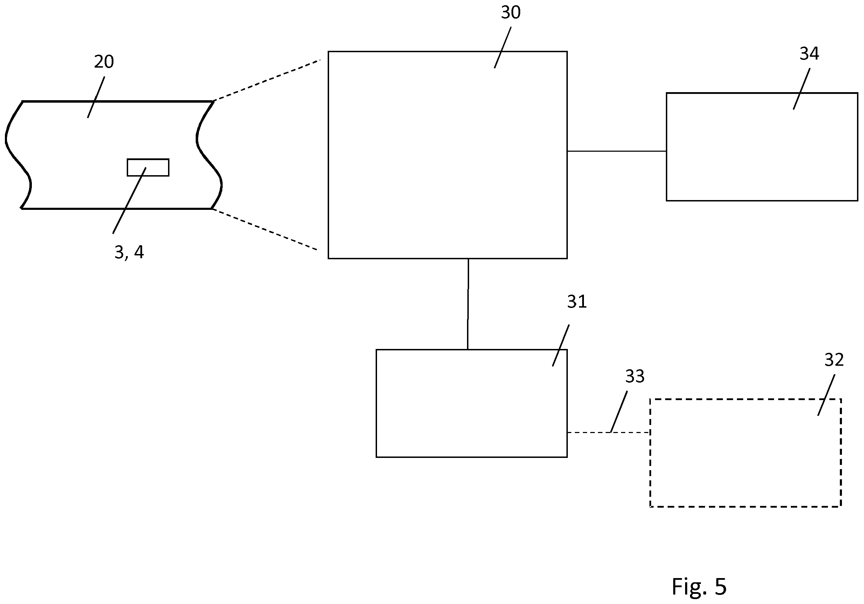

Die Fig. 5 zeigt ein schematisches Diagramm einer Vorrichtung zur Feststellung der Authentizität eines Glasrohr-Halbzeugs oder zur Rückverfolgung eines Hohlglasprodukts gemäß der vorliegenden Erfindung, das durch Weiterverarbeiten eines Glasrohr-Halbzeugs einschließlich einer thermischen Umformung des Glasrohr-Halbzeugs hergestellt worden ist. Gemäß der Fig. 5 ist hierzu eine Erfassungseinrichtung 30 vorgesehen, die zumindest eine Markierung 3 oder 4 auf dem Hohlglasprodukt (oder auf einem Glasrohr-Halbzeug) ausliest. Hierzu können im Falle eines digitalen Matrix-Codes (DMC), der mittels eines Verfahrens, wie in US 2003 0029849 A1, DE 102 34 002 A1 und WO 2012 028611 A1 der Anmelderin offenbart, optische Ausleseverfahren eingesetzt werden, was unter Steuerung einer Steuerungseinrichtung 34 erfolgt, insbesondere eines Prozessors. Hierzu kann Zugriff auf eine interne Datenbank 31 bestehen, in der relevante Daten gespeichert sind, die einen Rückschluss auf eine Originalität oder eine Rückverfolgung des Hohlglasprodukts 20 bis hin zum Glasrohr-Halbzeug ermöglichen, aus dem dieses hergestellt worden ist. Diese relevanten Daten können auch auf einer externen Datenbank 32 gespeichert sein, die beispielsweise von einem Original-Hersteller von Glasrohren oder einem zertifizierten weiterverarbeitenden Betrieb betrieben wird. Der Zugriff auf diese externe Datenbank 32 kann über ein Netzwerk erfolgen, beispielsweise ein Unternehmensnetzwerk oder das Internet, wobei gesicherte Datenverbindungen, einschließlich einer Verschlüsselung, bevorzugt werden.

Selbstverständlich kann die Steuerung auch über eine Steuereinrichtung 34 erfolgen, die von einem Original-Hersteller von Glasrohren oder einem zertifizierten weiterverarbeitenden Betrieb betrieben wird. Die Datenkommunikation kann hierzu über ein Netzwerk erfolgen, beispielsweise ein Unternehmensnetzwerk oder das Internet, wobei gesicherte Datenverbindungen, einschließlich einer Verschlüsselung, bevorzugt werden.

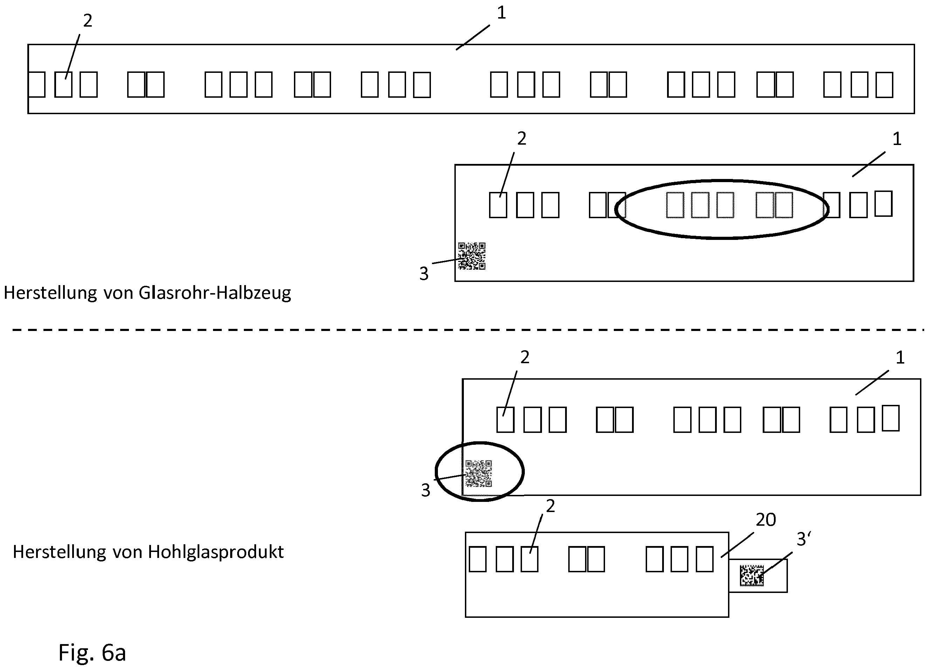

Die Fig. 6a fasst schematisch in verschiedenen Stadien der Weiterverarbeitung eines Glasrohr-Halbzeugs die an diesem vorgesehenen Markierungen zusammen. Im oberen Bildbereich ist zunächst ein kontinuierlicher Rohrstrang 1 unmittelbar nach der Rohrformung dargestellt. Dieser Rohrstrang 1 weist eine Mehrzahl von Rohrstrangmarkierungen 2 auf, wie vorstehend beschrieben. Von diesem Rohrstrang 1 werden beim Glasrohr-Hersteller Glasrohr-Halbzeuge 1 mit einer vorbestimmten Länge abgelängt, beispielsweise einer Länge von 1,5 m. Wie weiter in der Fig. 6a dargestellt, wird beim Ablängen des Glasrohr-Halbzeugs 1 eine zusätzliche Markierung 3 an einer vorbestimmten Position des Glasrohr-Halbzeugs 1 erzeugt, beispielsweise an einem hinteren Ende. Die Information dieser zusätzlichen Markierung 3 ist in geeigneter Weise mit der Information der Rohrstrangmarkierung verknüpft, um eine Entscheidung zu einer Originalität, insbesondere einer Authentizität, oder Herkunft des Glasrohr-Halbzeugs 1 und/oder zur Herkunft einer Einrichtung zu ermöglichen, mit der die Rohrstrangmarkierung 2 und/oder die zusätzliche Markierung 3 auf dem Glasrohr-Halbzeug 1 erzeugt wird, wie vorstehend beschrieben. Die relevanten Daten bei der Herstellung des Glasrohr-Halbzeugs 1 werden auch in einer Datenbank des Glasrohr-Herstellers in eineindeutiger Zuordnung zu dem jeweiligen Glasrohr-Halbzeug 1 gespeichert. Auf diese Datenbank kann ein autorisierter weiterverarbeitende Betrieb und/oder ein Abfüller zugreifen.

Im unteren Bildteil der Fig. 6a sind die Schritte dargestellt, die bei einem weiterverarbeitenden Betrieb ausgeführt werden. Zunächst wird das Glasrohr-Halbzeug 1 aus einer Transportverpackung entnommen. Dabei werden die Informationen aus der Rohrstrangmarkierung 2 und der zusätzlichen Markierung 3 ausgelesen und weiter verarbeitet. Anschließend wird das Glasrohr-Halbzeug 1 weiter verarbeitet, und zwar gemäß der Fig. 6a zu einem Hohlglasprodukt 20, beispielsweise zu einem Spritzenkörper, Vial oder dergleichen. Wie in der Fig. 6a gezeigt, wird bei der Weiterverarbeitung des Glasrohr-Halbzeugs 1 die zusätzliche Markierung 3, nachdem diese ausgelesen wurde, entfernt, beispielsweise durch Abtrennen des Abschnitts mit der zusätzlichen Markierung von dem Glasrohr-Halbzeug. Die aus der zusätzlichen Markierung 3 ausgelesene Information wird zur Erzeugung einer neuen Markierung 3' verwendet, die in der vorstehend beschriebenen Weise mit der Information der Rohrstrangmarkierung 2 verknüpft ist, um eine Entscheidung zu einer Originalität, insbesondere einer Authentizität, oder Herkunft des Glasrohr-Halbzeugs 1 und/oder zur Herkunft einer Einrichtung zu ermöglichen, mit der die erste und/oder zweite Markierung auf dem Glasrohr-Halbzeug 1 erzeugt wird.

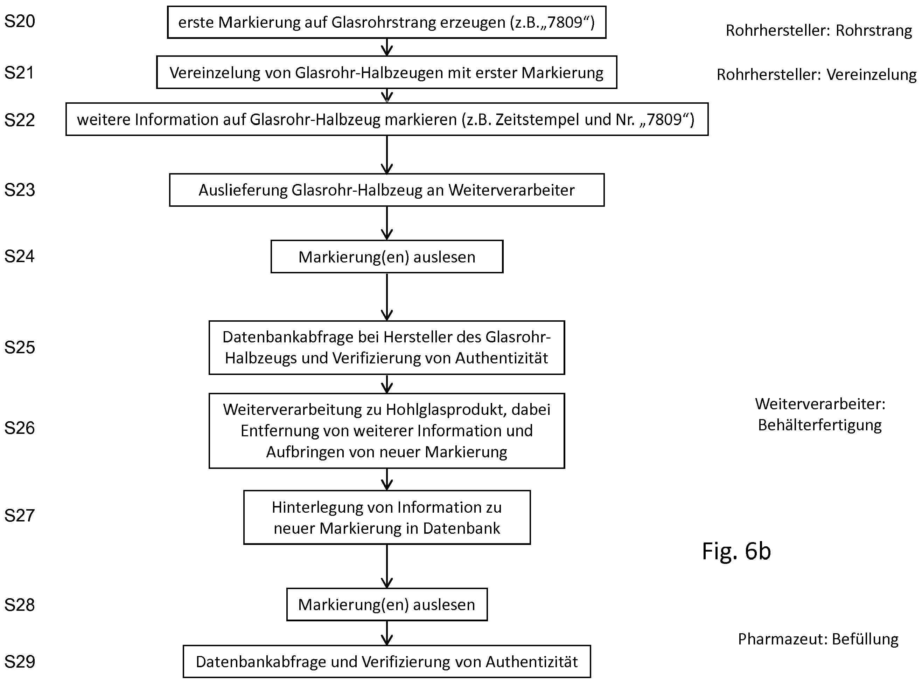

Die Fig. 6b zeigt ein schematisches Flussdiagramm der verschiedenen Stadien der Weiterverarbeitung eines Glasrohr-Halbzeugs zu einem Pharma-Packmittel und dessen weitere Verarbeitung. Zunächst wird beim Hersteller des Glasrohr-Halbzeugs auf dem kontinuierlichen Glasrohrstrang in dem Schritt S20 eine erste Markierung erzeugt, beispielsweise eine fortlaufende Nummer ("7809"). Beim Ablängen und Vereinzeln der Glasrohr-Halbzeuge im Schritt S21 wird das abgelängte Glasrohr-Halbzeug im Schritt S22 mit einer weiteren Information markiert, im dargestellten Beispiel mit einem Zeitstempel der Vereinzelung des Glasrohr-Halbzeugs.

Im Anschluss an den Schritt S22 und eine weitere Verpackung erfolgt eine Auslieferung des Glasrohr-Halbzeugs an einen weiterverarbeitenden Betrieb (Schritt S23). Dieser liest nach einem Entpacken des Glasrohr-Halbzeugs die Markierung(en) auf dem Glasrohr-Halbzeug aus (Schritt S24). Anhand dieser Information erfolgt in dem Schritt S25 mittels einer Datenbankabfrage beim Hersteller des Glasrohr-Halbzeugs eine Verifizierung der Authentizität / der Originalität des Glasrohr-Halbzeugs. Ist diese Verifizierung erfolgreich, erfolgt die weitere Verarbeitung des Glasrohr-Halbzeugs zu einem Hohlglasprodukt (Schritt S26). Dabei wird die zusätzliche Markierung nach Auslesen ihrer Information entfernt, während die erste Markierung, die bevorzugt bei Temperaturen oberhalb der Transformationstemperatur des Glases erzeugt wurde, nicht verändert wird. Anschließend wird an den Hohlglasprodukt eine neue Markierung aufgebracht, wie vorstehend anhand der Fig. 6a beschrieben. Dabei ist die Information der neuen Markierung in der vorstehend beschriebenen Weise mit der Information der Rohrstrangmarkierung (ersten Markierung) verknüpft, um eine Entscheidung zu einer Originalität, insbesondere einer Authentizität, oder Herkunft des Glasrohr-Halbzeugs 1 und/oder zur Herkunft einer Einrichtung zu ermöglichen, mit der die erste und/oder zweite Markierung auf dem Glasrohr-Halbzeug 1 erzeugt wird. Die hierfür relevanten Informationen werden in dem Schritt S27 auch in einer Datenbank hinterlegt, bei der es sich grundsätzlich auch um die Datenbank des Herstellers des Glasrohr-Halbzeugs handeln kann.

Nach dem Schritt S27 werden die Hohlglasprodukte an einen pharmazeutischen Betrieb ausgeliefert, wie diese befüllt werden. Hierzu werden beim pharmazeutischen Betrieb zunächst die Markierungen auf dem Hohlglasprodukt ausgelesen (Schritt S28), um eine Authentizität / Originalität des Hohlglasprodukts zu verifizieren. Hierzu erfolgt bei dem pharmazeutischen Betrieb eine Datenbankabfrage, um die Authentizität / Originalität des Hohlglasprodukts zu verifizieren (Schritt S29). Anhand der zusätzlichen Markierung können weitere nützliche Informationen ermittelt und an den pharmazeutischen Betrieb übermittelt werden. Diese Informationen können insbesondere Informationen betreffen, die bei der Weiterverarbeitung des Glasrohr-Halbzeugs zu dem Hohlglasprodukt ermittelt wurden, beispielsweise geometrische Größen des Hohlglasprodukts, wie beispielsweise Innendurchmesser, Außendurchmesser, Wandstärke, Längen, Variationen dieser Größen usw. Diese Parameter können bei dem pharmazeutischen Betrieb weiter verwendet werden, um ein Befüllen der Hohlglasprodukte geeignet zu steuern.

Wie dem Fachmann beim Studium der vorstehenden Beschreibung ersichtlich sein wird, sind weitere Ausführungsformen der vorliegenden Erfindung, die explizit auch mittels unabhängiger Patentansprüche beansprucht werden können, auf das Folgende gerichtet:

### Ausführungsform A

Glasrohr-Halbzeug (1) zur Verwendung als Halbzeug zur Herstellung von Hohlglasprodukten (20) durch zumindest abschnittsweises thermisches Umformen, wobei das Glasrohr-Halbzeug (1) mit einer ersten Markierung mit Information bezüglich Herkunft oder bezüglich Herkunft und Herstellung des Glasrohr-Halbzeugs (1) und einer zweiten Markierung versehen ist, deren Information derart mit der Information der ersten Markierung verknüpft ist, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Glasrohr-Halbzeugs (1) und/oder einer Herkunft Einrichtung zu ermöglichen, mit der die erste und/oder zweite Markierung auf dem Glasrohr-Halbzeug (1) erzeugt wurde.

### Ausführungsform B

Hohlglasprodukt aus Glas (20), hergestellt durch Weiterverarbeiten eines Glasrohr-Halbzeugs (1) einschließlich eines zumindest abschnittsweisen thermischen Umformens des Glasrohr-Halbzeugs (1), wobei das Hohlglasprodukt (20) mit einer ersten Markierung mit Information bezüglich Herkunft oder bezüglich Herkunft und Herstellung des Glasrohr-Halbzeugs (1) und einer zweiten Markierung versehen ist, deren Information derart mit der Information der ersten Markierung verknüpft ist, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Hohlglasprodukts (20) und/oder Herkunft einer Einrichtung zu ermöglichen, mit der die erste und/oder zweite Markierung auf dem Glasrohr-Halbzeug (1) erzeugt wurde.

### Ausführungsform C

Verfahren nach Anspruch 14 oder 15, wobei das Hohlglasprodukt (20) ein Behälter zur Aufnahme von pharmazeutischen, medizinischen oder kosmetischen Substanzen ist, insbesondere ein Vial, eine Karpule oder ein Spritzenkörper.

### Ausführungsform D

Vorrichtung zur Rückverfolgung eines Glasrohr-Halbzeugs (1), insbesondere eines Glasrohr-Halbzeugs (1) gemäß Ausführungsform A, oder eines Hohlglasprodukts, das durch Weiterverarbeiten eines Glasrohr-Halbzeugs (1) einschließlich einer zumindest abschnittsweisen thermischen Umformung des Glasrohr-Halbzeugs (1) hergestellt ist, umfassend:
eine Erfassungseinrichtung (30) zum Auslesen einer ersten Information aus einer ersten Markierung (2; 10), die auf dem Glasrohr-Halbzeug (1) oder Hohlglasprodukt (20) vorgesehen ist, und zum Auslesen einer zweiten Information aus einer zweiten Markierung (3; 11), die auf dem Glasrohr-Halbzeug (1) oder Hohlglasprodukt (20) vorgesehen ist;
eine Prozessoreinrichtung (34), die ausgelegt ist um festzustellen, ob die erste und die zweite Information richtig miteinander verknüpft sind, um auf Grundlage der Verknüpfung der Information der ersten Markierung (2; 10) mit der Information der zweiten Markierung (3; 11) eine Entscheidung zu einer Originalität, insbesondere einer Authentizität, oder zu einer Herkunft des Glasrohr-Halbzeugs (1) oder Hohlglasprodukts (20) und/oder zu einer Herkunft einer Einrichtung zu ermöglichen, mit der die erste und/oder zweite Markierung auf dem Glasrohr-Halbzeug (1) erzeugt worden ist.

### Ausführungsform E

Computerprogrammprodukt mit Software-Codeabschnitten, die, wenn diese in eine Prozessoreinrichtung (34) eingelesen werden, die Prozessoreinrichtung dazu veranlassen, das Verfahren nach einem der Ansprüche 11 bis 15 auszuführen, um auf Grundlage der Verknüpfung der Information der ersten Markierung (2; 10) mit der Information der zweiten Markierung (3; 11) eine Entscheidung zu einer Originalität, insbesondere einer Authentizität, oder zu einer Herkunft des Glasrohr-Halbzeugs (1) oder des Hohlglasprodukts (20) und/oder zu einer Herkunft einer Einrichtung zu ermöglichen, mit der die erste Markierung (2; 10) auf dem Glasrohr-Halbzeug (1) erzeugt worden ist.

### BEZUGSZEICHENLISTE

- 1: Glasrohr oder Glasrohr-Halbzeug
- 2: Rohrstrangmarkierung
- 3: zusätzliche Markierung
- 3': zusätzliche Markierung
- 4: Kombinations-Markierung

- 8: erste Information
- 9: zweite Information
- 10: erster Abschnitt
- 11: zweiter Abschnitt
- 12: dritter Abschnitt

- 20: Glasrohr-Halbzeug / Hohlglasprodukt / Pharmabehälter
- 21: Spritzenkörper
- 22: Flansch
- 23: Ausstoßöffnung

- 30: Erfassungseinrichtung
- 31: interne Datenbank
- 32: externe Datenbank
- 33: Netzwerk
- 34: Prozessoreinrichtung / Steuereinrichtung

- 1: vorbestimmter Abstand
- Z: Längsrichtung

## Patentansprüche

1. Verfahren zum Herstellen eines Glasrohr-Halbzeugs (1), mit den Schritten:
Bereitstellen des Glasrohr-Halbzeugs (1) mit einer ersten Markierung (2; 10); und
Markieren des Glasrohr-Halbzeugs (1) mit einer zweiten Markierung (3; 11); wobei
die erste Markierung (2; 10) Information bezüglich Herkunft oder bezüglich Herkunft und Herstellung des Glasrohr-Halbzeugs (1) umfasst; und
eine Information der zweiten Markierung (3; 11) derart mit einer Information der ersten Markierung (2; 10) verknüpft ist, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Glasrohr-Halbzeugs (1) und/oder zur Herkunft einer Einrichtung zu ermöglichen, mit der die erste und/oder zweite Markierung auf dem Glasrohr-Halbzeug (1) erzeugt wird.

2. Verfahren nach Anspruch 1, wobei die erste Markierung (2; 10) weiterhin Information bezüglich Abmessungen des Glasrohr-Halbzeugs (1) und/oder Prozessparametern bei der Rohrformgebung des Glasrohr-Halbzeugs (1) umfasst,
wobei die erste Markierung bei der Rohrformgebung bevorzugt kontinuierlich oder diskontinuierlich unter vorbestimmten Abständen (1) zueinander in Längsrichtung des Glasrohr-Halbzeugs (1) erzeugt wird, und
wobei die erste Markierung (2; 10) bevorzugt bei Temperaturen oberhalb einer Transformationstemperatur (T_{G}) des Glases des Glasrohr-Halbzeugs (1) erzeugt wird.

3. Verfahren nach einem der vorhergehenden Ansprüche, wobei die zweite Markierung als einzelne Markierung (3; 4) an einer vorbestimmten Position auf dem Glasrohr-Halbzeug (1) erzeugt wird, die verschieden zu einer Position der ersten Markierung ist.

4. Verfahren nach Anspruch 1 oder 2, wobei die erste und zweite Markierung als kombinierte Markierung (4) unmittelbar nebeneinander auf dem Glasrohr-Halbzeug (1) erzeugt werden.

5. Verfahren nach einem der vorhergehenden Ansprüche, wobei die zweite Markierung bei Temperaturen unterhalb einer Transformationstemperatur (T_{G}) des Glases des Glasrohr-Halbzeugs (1) erzeugt wird, insbesondere durch Aufdrucken oder Aufstempeln der zweiten Markierung auf dem Glasrohr-Halbzeug (1), und/oder
wobei die zweite Markierung bevorzugt während einer Vereinzelung des Glasrohr-Halbzeugs (1) aus einem Endlos-Glasrohrstrang erzeugt wird.

6. Verfahren nach einem der vorhergehenden Ansprüche, weiterhin umfassend eine Rückverfolgung des Glasrohr-Halbzeugs (1), mit den Schritten:
Auslesen einer ersten Information aus der ersten Markierung (2; 10 auf dem Glasrohr-Halbzeug (1);
Auslesen einer zweiten Information aus der zweiten Markierung (3; 11 auf dem Glasrohr-Halbzeug (1);
Feststellen, ob die erste und die zweite Information richtig miteinander verknüpft sind, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Glasrohr-Halbzeugs (1) und/oder Herkunft einer Einrichtung zu ermöglichen, mit der die erste und/oder zweite Markierung auf dem Glasrohr-Halbzeug (1) erzeugt worden ist.

7. Verfahren nach Anspruch 6, wobei zum Feststellen, ob die erste und die zweite Information richtig miteinander verknüpft sind, überprüft wird, ob die erste und die zweite Information entsprechend einer vorbestimmten Vorschrift miteinander verknüpft sind.

8. Verfahren nach Anspruch 6 oder 7, wobei zum Feststellen, ob die erste und die zweite Information richtig miteinander verknüpft sind, über ein Netzwerk (33) auf eine Datenbank (32) zugegriffen wird, in der eine Verknüpfung zwischen den Informationen der ersten und der zweiten Markierung abgespeichert ist.

9. Verfahren zum Herstellen eines Hohlglasprodukts (20) aus einem Glasrohr-Halbzeug (1), das mit einer ersten Markierung mit Information bezüglich Herkunft oder bezüglich Herkunft und Herstellung des Glasrohr-Halbzeugs (1) und mit einer zweiten Markierung markiert ist, deren Information derart mit der Information der ersten Markierung verknüpft ist, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Glasrohr-Halbzeugs (1) und/oder Herkunft einer Einrichtung zu ermöglichen, mit der die erste und/oder zweite Markierung auf dem Glasrohr-Halbzeug (1) erzeugt wurde, mit den Schritten:
Bereitstellen des Glasrohr-Halbzeugs (1) mit der ersten und der zweiten Markierung;
Weiterverarbeiten des Glasrohr-Halbzeugs (1) und zumindest abschnittsweises thermisches Umformen des Glasrohr-Halbzeugs (1) zu dem Hohlglasprodukt (20) bei Temperaturen oberhalb einer Transformationstemperatur (T_{G}) des Glases des Glasrohr-Halbzeugs (1);
wobei die erste und die zweite Markierung unverändert bleiben und auf dem hergestellten Hohlglasprodukt (20) nach dessen Herstellung auslesbar sind.

10. Verfahren zum Herstellen eines Hohlglasprodukts (20) aus einem Glasrohr-Halbzeug (1), das mit einer ersten Markierung mit Information bezüglich Herkunft oder bezüglich Herkunft und Herstellung des Glasrohr-Halbzeugs (1) des Glasrohr-Halbzeugs (1) und einer zweiten Markierung markiert ist, deren Information derart mit der Information der ersten Markierung verknüpft ist, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Glasrohr-Halbzeugs (1) und/oder Herkunft einer Einrichtung zu ermöglichen, mit der die erste und/oder zweite Markierung auf dem Glasrohr-Halbzeug (1) erzeugt wurde, mit den Schritten:
Bereitstellen des Glasrohr-Halbzeugs (1) mit der ersten und der zweiten Markierung;
Weiterverarbeiten des Glasrohr-Halbzeugs (1) und zumindest abschnittsweises thermisches Umformen des Glasrohr-Halbzeugs (1) zu dem Hohlglasprodukt (20) bei Temperaturen oberhalb einer Transformationstemperatur (T_{G}) des Glases des Glasrohr-Halbzeugs (1);
wobei die zweite Markierung beim Weiterverarbeiten durch zumindest abschnittsweises thermisches Umformen des Glasrohr-Halbzeugs (1) entfernt wird und eine zusätzliche Markierung auf dem Hohlglasprodukt erzeugt wird, sodass die erste und die zusätzliche Markierung auf dem hergestellten Hohlglasprodukt (20) nach dessen Herstellung auslesbar sind, wobei eine Information der zusätzlichen Markierung derart mit einer Information der ersten Markierung verknüpft ist, um auf Grundlage der Verknüpfung der Information der ersten Markierung (2; 10) mit der Information der zusätzlichen eine Entscheidung zu einer Originalität, insbesondere einer Authentizität, oder Herkunft des Hohlglasprodukts (20) und/oder Herkunft einer Einrichtung zu ermöglichen, mit der die erste Markierung (2; 10) auf dem Glasrohr-Halbzeug (1) erzeugt worden ist.

11. Verfahren nach Anspruch 9 oder 10, wobei die erste Markierung bei einer Rohrformgebung zur Herstellung des Glasrohr-Halbzeugs kontinuierlich oder diskontinuierlich unter vorbestimmten Abständen (1) zueinander in Längsrichtung des Glasrohr-Halbzeugs (1) erzeugt wird,
wobei die erste Markierung bevorzugt bei Temperaturen oberhalb der Transformationstemperatur (T_{G}) des Glases des Glasrohr-Halbzeugs (1) erzeugt wird.

12. Verfahren nach einem der Ansprüche 9 bis 11, wobei die zweite Markierung als einzelne Markierung (3; 4) an einer vorbestimmten Position auf dem Glasrohr-Halbzeug (1) erzeugt wird, die verschieden zu einer Position der ersten Markierung ist, oder wobei die erste und zweite Markierung als kombinierte Markierung unmittelbar nebeneinander auf dem Hohlglasprodukt (20) angeordnet sind.

13. Verfahren nach einem der Ansprüche 9 bis 12, wobei die erste Markierung (2; 10) weiterhin Information bezüglich Abmessungen des Glasrohr-Halbzeugs (1) und/oder Prozessparametern bei der Rohrformgebung des Glasrohr-Halbzeugs (1) umfasst.

14. Verfahren nach einem der Ansprüche 9 bis 13, weiterhin umfassend eine Rückverfolgung des Hohlglasprodukts (20), das durch Weiterverarbeiten eines Glasrohr-Halbzeugs (1) einschließlich einer zumindest abschnittsweisen thermischen Umformung des Glasrohr-Halbzeugs (1) hergestellt ist, mit den Schritten:
Auslesen einer ersten Information aus der ersten Markierung (2; 10) auf dem Hohlglasprodukt (20);
Auslesen einer zweiten Information aus der zweiten Markierung (3; 11) auf dem Hohlglasprodukt (20);
Feststellen, ob die erste und die zweite Information richtig miteinander verknüpft sind, um auf Grundlage der Verknüpfung der Information der ersten Markierung (2; 10) mit der Information der zweiten Markierung (3; 11) eine Entscheidung zu einer Originalität, insbesondere einer Authentizität, oder Herkunft des Hohlglasprodukts (20) und/oder Herkunft einer Einrichtung zu ermöglichen, mit der die erste und/oder zweite Markierung auf dem Glasrohr-Halbzeug (1) erzeugt worden ist.

15. Verfahren nach Anspruch 14, wobei zum Feststellen, ob die erste und die zweite Information richtig miteinander verknüpft sind,
überprüft wird, ob die erste und die zweite Information entsprechend einer vorbestimmten Vorschrift miteinander verknüpft sind, und/oder
über ein Netzwerk (33) auf eine Datenbank (32) zugegriffen wird, in der eine Verknüpfung zwischen den Informationen der ersten und der zweiten Markierung abgespeichert ist.
